(19) Europäisches Patentamt

European Patent Office

Office européen des brevets

(11) **EP 1 482 590 A1**

(12) **EUROPEAN PATENT APPLICATION**

(43) Date of publication:
01.12.2004 Bulletin 2004/49

(51) Int Cl.[7]: **H01M 8/24**, H01M 8/02, H01M 8/12

(21) Application number: 04012598.1

(22) Date of filing: 27.05.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: 30.05.2003 JP 2003154557

(71) Applicant: **Sanyo Electric Biomedical Co., Ltd.**
**Moriguchi-shi, Osaka-fu (JP)**

(72) Inventors:
• **Okamoto, Takashi**
**Oura-gun Gunma 370-0533 (JP)**
• **Taniguchi, Shunsuke**
**Ota-city Gunma 373-0806 (JP)**

(74) Representative: **Glawe. Delfs. Moll**
**Patentanwälte**
**Postfach 26 01 62**
**80058 München (DE)**

(54) **Solid oxide fuel cell, solid oxide fuel cell assembly, solid oxide fuel cell module, and solid oxide fuel cell power generator**

(57) A shape and conductivity of a cylindrical porous metal substrate of low power collection losses are defined, and a solid oxide fuel cell of a high output or high start-up performance is provided by using the cylindrical porous metal substrate. In the solid oxide fuel cell of the invention, the cylindrical porous metal substrate which has a conductivity of 130 S/cm or more is used, and a power collecting section is connected to a position which does not exceed 100 cm from any place thereof. A first electrode, a solid electrolytic layer, and a second electrode are formed on a full periphery of the cylindrical porous metal substrate. Thus, it is possible to obtain a solid oxide fuel cell of easy cell formation and low power collection losses, i.e., high durability and a high output.

FIG. 1

EP 1 482 590 A1

**Description**

## BACKGROUND OF THE INVENTION

The present invention relates to a solid oxide fuel cell, and more particularly to a shape and a structure of a solid oxide fuel cell which comprises a cylindrical porous metal substrate and takes power collection losses into consideration.

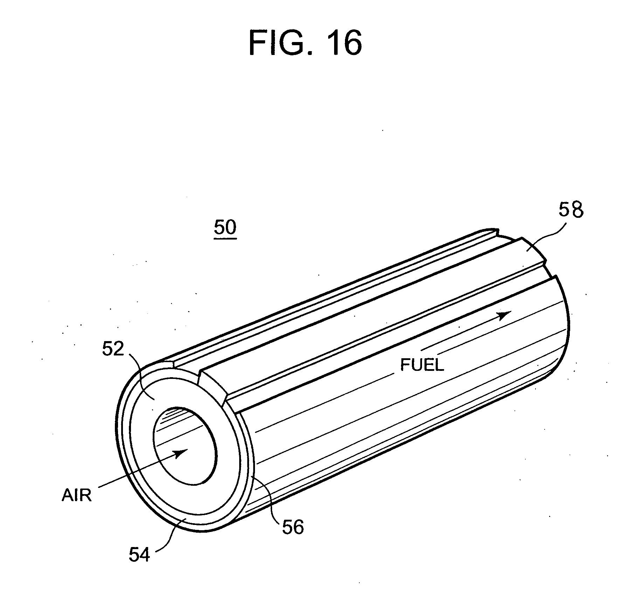

As a conventional cylindrical solid oxide fuel cell (SOFC) 50, as shown in FIG. 16, a type is generally used in which a solid oxide electrolyte layer 54 and a fuel electrode 56 are sequentially formed into circular arc shapes on a cathode tube 52 constituted of a porous cylinder that also serves as an oxidant electrode, and an interconnector layer 58 is formed in cut-off parts of the circular arcs to be brought into contact with an outer surface of the cathode tube 52 and extended in a longitudinal direction thereof. It is because if the cathode tube 52 is formed by using a material whose conductivity is not high, power must be collected on the oxidant electrode side by forming the interconnector layer 58 extended in the longitudinal direction of the tube. Such an SOFC 50 is configured to collect power from the interconnector layer 58 and the fuel electrode 56 by supplying an oxidant gas into the cylinder and a fuel gas to an outer peripheral part of the cylinder, and generating power by an electrochemical reaction between the oxidant electrode (50) and the fuel electrode 56.

However, in the SOFC 50 configured to collect power from the interconnector layer 58, when a plurality of cells 50 are formed into a module, a structure becomes complex, formation of the interconnector layer 58 itself is difficult, and there are problems of easy occurrence of cracking or peeling-off in the electrolytic layer 54 or the fuel electrode 56 near the interconnector layer 58.

Meanwhile, in the SOFC, in recent years, research has progressed to lower an operating temperature (about 500 to 700°C), and development of porous metal substrates that use heat resistant metals has actively been made. The development of the porous metal substrates has been accompanied by a proposal of an SOFC of a type which executes power collection not from the interconnector layer. For example, Japanese Patent Application Laid-Open No. 10-125346 proposes a stack of a cylindrical SOFC in which a plurality of single cells that use conductive cylindrical porous substrates are arrayed, and stacked alternately with electrical separators. Additionally, Japanese Patent Application Laid-Open No. 2000-289249 proposes a solid electrolytic type fuel,cell in which a cylindrical single cell having a metal support is connected through a connection member to a collector.

However, even in the SOFC that uses the cylindrical porous metal substrate, there are power collection losses caused by internal resistance of the cylindrical porous metal substrate. Simple setting of a large length of the substrate to secure a current density causes an increase in power collection loses and deterioration of efficiency of the SOFC.

Furthermore, no proposals have been made regarding a method which can increase a temperature of the SOFC run at a high temperature to a running state by a simple structure and within a short time.

## SUMMARY OF THE INVENTION

The present invention has been made with the foregoing problems in mind, and a cylindrical porous metal substrate of low power collection losses is constituted by defining an ideal shape and conductivity thereof. Additionally, an object is to provide an SOFC which secures a high output or exhibits high start-up performance by defining an assembly structure of the SOFC that uses the cylindrical porous metal substrate.

The inventors have repeatedly conducted serious studies to solve the foregoing problems, and found that the problems can be solved by using a porous metal as a substrate material, and devising a shape of a cylindrical porous metal substrate and a structure of a fuel cell main body, whereby the present invention has been completed.

That is, a first aspect of the present invention is directed to a solid oxide fuel cell comprising solid oxide fuel cell portions each of which includes a cylindrical porous metal substrate, a first electrode formed on a full periphery of the porous metal substrate, a solid electrolytic layer formed on a full periphery of the first electrode, and a second electrode formed on a full periphery of the solid electrolytic layer; and a first power collecting section connected to at least a part of the porous metal substrate to collect power from the first electrode.

According to the invention of claim 1, the solid electrolytic layer and the second electrode are formed on the full periphery without disposing any interconnector layers different from the conventional case. Thus, cell formation becomes easy, and it is possible to prevent a problem of occurrence of cracking or peeling-off in the solid electrolytic layer or the second electrode near the interconnector layer.

Additionally, in the solid oxide fuel cell configured to collect power from the interconnector layer, the structure is complex when the plurality of cells are formed into a module. However, it is possible to facilitate module formation by disposing the collector connected to at least a part of the porous metal substrate.

An invention of claim 2 of the present invention is directed to the solid oxide fuel cell according to claim 1, wherein the porous metal substrate has a conductivity of 130 S/cm or more.

According to the invention of claim 2, since the conductivity of the porous metal substrate is 130 S/cm or more, sufficient power can be collected from the collector connected to a part of the same.

An invention of claim 3 of the present invention is directed to the solid oxide fuel cell according to claim 2, wherein the first power collecting section is connected to a position which does not exceed a distance of 100 cm from any place of the porous metal substrate.

According to the invention of claim 3, since the first power collecting section is disposed in the position which does not exceed 100 cm from any place of the porous metal substrate, more practical power collection can be executed.

An invention of claim 4 of the present invention is directed to a solid oxide fuel cell assembly comprising a plurality of porous metal substrates of the solid oxide fuel cell portions described in one of claims 1 to 3 which are connected to the first power collecting section that is connected to the first electrode.

According to the invention of claim 4, the plurality of solid oxide fuel cell portions can be easily assembled, and the solid oxide fuel cell assembly having an optional output can be formed.

An invention of claim 5 of the present invention is directed to the solid oxide fuel cell assembly, wherein the plurality of solid oxide fuel cell portions are arranged on the same circumference, the porous metal substrate of each solid oxide fuel cell portion is connected to the first power collecting section, and a second power collecting section is arranged in a center of the circumference to be brought into contact with the second electrode of each solid oxide fuel cell portion.

According to the invention of claim 5, since the second power collecting section is disposed to be brought into contact with the second electrode of each solid oxide fuel cell portion arranged on the circumference, power collection can be efficiently executed from the second electrode.

An invention of claim 6 of the present invention is directed to a solid oxide fuel cell module comprising a plurality of stacked solid oxide fuel cell assemblies described in claim 4 in which the plurality of solid oxide fuel cell portions are arranged in a row and the porous metal substrate of each solid oxide fuel cell portion is connected to the first power collecting section, wherein directions of the solid oxide fuel cell portions of the adjacent solid oxide fuel cell assemblies are orthogonal to each other.

According to the invention of claim 6, since the solid oxide fuel cell assembly can be formed into a compact module, and the electrode of the solid oxide fuel cell is brought into contact with that of the other solid oxide fuel cell, a uniform electrode potential can be maintained between the solid oxide fuel cells. Thus, it is possible to obtain an efficient solid oxide fuel cell module.

An invention of claim 7 of the present invention is directed to a solid oxide fuel cell power generator comprising a porous metal casing made of a porous metal; fuel gas supplying means connected to the porous metal casing to supply a fuel gas to the porous metal casing; a combustion chamber disposed outside the porous metal casing; and oxygen supplying means connected to the combustion chamber to supply oxygen to the combustion chamber, wherein the solid oxide fuel cell assembly or the solid oxide fuel cell module described in one of claims 4 to 6 is housed in the porous metal casing, the second electrode of each solid oxide fuel cell portion is disposed to be brought into contact with the porous metal substrate, and the solid oxide fuel cell assembly or the solid oxide fuel cell module is heated by combusting the fuel gas which has flowed out from the porous metal casing into the combustion chamber.

According to the invention of claim 7, since the fuel gas that has not contributed to power generation at the fuel electrode flows out from the porous metal casing into the combustion chamber to be combusted, heat is supplied through the porous metal casing to the solid oxide fuel cell to enable an increase of a temperature to a running temperature zone of the solid oxide fuel cell within a short time. Thus, it is possible to obtain a solid oxide fuel cell power generator of high start-up performance.

**BRIEF DESCRIPTION OF THE DRAWINGS**

FIG. 1 is a schematic perspective view of a cylindrical porous metal substrate;
FIG. 2 is a graph showing a relation between conductivity and a length of the cylindrical porous metal substrate at each current density when a power collection loss is assumed to be 0.05 V;
FIG. 3 is a graph in which a range up to conductivity 2000 S/cm of FIG. 2 is expanded;
FIG. 4 is a graph showing a relation between the length of the cylindrical porous metal substrate and the current density when the power collection loss is assumed to be 0.05 V;
FIG. 5 is a graph showing a relation between conductivity and a length of the cylindrical porous metal substrate at each current density when a power collection loss is assumed to be 0.01 V;
FIG. 6 is a graph showing a relation between the length of the cylindrical porous metal substrate and the current density when the power collection loss is assumed to be 0.01 V;
FIG. 7 is a schematic perspective view showing a solid oxide fuel cell assembly according to an Embodiment 2 of the present invention;
FIG. 8 is a schematic sectional view showing the solid oxide fuel cell assembly of the Embodiment 2 of the invention;
FIG. 9 is a schematic view of an expanded connection part when a metal plate and a cylindrical porous metal substrate are connected to each other by a screw fixing system in the solid oxide fuel cell assembly of the Embodiment 2 of the invention;
FIG. 10 is a schematic view of an expanded connection part when the metal plate and the cylindrical porous metal substrate are connected to each other by a flange fixing system in the solid oxide fuel cell assembly of the Embodiment 2 of the invention;
FIG. 11 is a schematic view of an expanded connection part when the metal plate and the cylindrical porous metal substrate are connected to each other by an engagement fixing system in the solid oxide fuel cell assembly of the Embodiment 2 of the invention;
FIG. 12 is a schematic perspective view showing a solid oxide fuel cell assembly according to an Embodiment 3 of the present invention;
FIG. 13 is a schematic sectional view showing the solid oxide fuel cell assembly of the Embodiment 3 of the invention;
FIG. 14 is a schematic perspective view showing a solid oxide fuel cell module according to an Embodiment 4 of the present invention;
FIG. 15 is a schematic perspective view showing a solid oxide fuel cell power generator according to an Embodiment 5 of the present invention; and
FIG.16 is a schematic perspective view showing a conventional solid oxide fuel cell.

## DESCRIPTION OF THE PREFERRED EMBODIMENTS

Next, the present invention will be described in detail.

A metal material for a cylindrical porous metal substrate of a solid oxide fuel cell of the present invention is a heat resistant metal. This single cell is manufactured at about 800 to 1100°C, and run at 500°C or higher. Thus, for the metal material of the cylindrical porous metal substrate, it is necessary to use a heat resistant metal which is stable in such a temperature range in air.

Specifically, it is necessary to use a heat resistant metal of oxidation resistance in which a mass increase per unit area accompanying oxidation of the cylindrical porous metal substrate is about 0.01 mg/cm$^2$ an hour at least during running.

In order to prevent destruction of an electrode or an electrolytic layer during single cell manufacturing or a temperature change which accompanies starting/stopping of the fuel cell, a coefficient of thermal expansion is preferably aligned therewith, i.e., in a range of $10 \times 10^{-6}$ to $3.4 \times 10^{-5} K^{-1}$.

Such a cylindrical porous metal substrate is manufactured by a well-known method of mixing→kneading→extrusion molding→drying→degreasing→in-vacuum sintering of a powder of the heat resistant metal material whose particle diameter is about several tens to several hundreds of μm with a binder.

Here, control of a degree of sintering is important. If the degree of sintering is high, gas permeability drops to reduce cell characteristics. If the degree of sintering is low, a reduction occurs in strength of the cylindrical porous metal substrate (easy destruction) during running to cause a problem of lowered thermal conductivity.

A reason for the above is that the cylindrical porous metal substrate is exposed to a high-temperature atmosphere to form an oxide layer of a thickness of several μm to several tens of μm on a surface of the material, and if the degree of particle sintering is low, the oxide layer spreads to the entire cylindrical porous metal substrate to disconnect metal microparticles from one another.

It is therefore apparent that porosity of the cylindrical porous metal substrate should be about 30 to 70%, preferably about 40 to 60%, and an average pore diameter should preferably be about several μm to several hundreds of μm. Thus, in the single cell manufactured according to the embodiment (described later), porosity of the cylindrical porous metal substrate is 40%, and an outer diameter thereof is 20 mm.

Embodiment 1

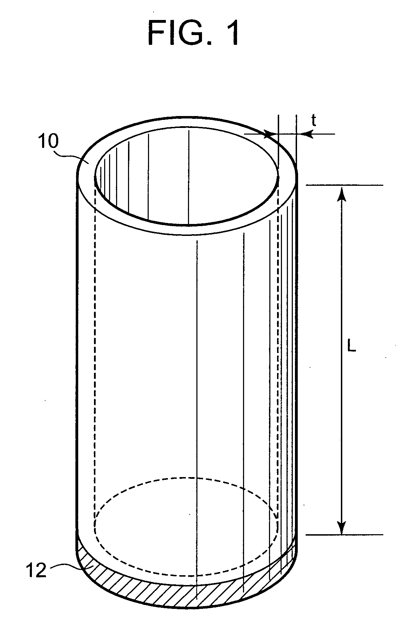

As shown in FIG. 1, in the case of collecting power from a power collecting section 12 at an end of a cylindrical porous metal substrate 10, a power collection loss occurs due to electric resistance in a longitudinal direction of the cylindrical porous metal substrate 10. Here, a relation between conductivity and a power collection loss of the cylindrical porous metal substrate 10 can be calculated as in the case of a method described in pp. 337 to 340, Electrochemistry 68, No. 5 (2000) by Taniguchi et al., if parameters are set as follows.

L(cm): length of cylindrical porous metal substrate (but 1/2 of cylindrical porous metal substrate length if power collection is executed from both ends)
o(S/cm): conductivity of cylindrical porous metal substrate
t(cm): tube thickness of cylindrical porous metal substrate

$$\rho(\Omega/cm): 1/(\sigma(S/cm)\times t(cm)\times 1(cm))$$

$R_e(\Omega cm^2)$: (electrolytic resistance+anode reaction resistance+cathode reaction resistance)
$V_{ocv}(V)$: open circuit voltage

A cell voltage V (V) at an average current density I (A/cm$^2$) is represented by the following equation (1):

$$V = V_{OCV} - R_e I \left[ \frac{L}{(R_e/\rho)^{\frac{1}{2}}\left\{ 1 - \exp\left( -(\rho/R_e)^{\frac{1}{2}}L \right) \right\}} \right]$$

A power collection loss is a difference from a cell voltage ($V_{ocv}$-$R_e\times$I) when the power collection loss is zero, and represented by the following equation (2):

$$R_e I \left[ \frac{L}{(R_e/\rho)^{\frac{1}{2}}\left\{ 1 - \exp\left( -(\rho/R_e)^{\frac{1}{2}}L \right) \right\}} - 1 \right]$$

The power collection loss greatly affects power generation efficiency. That is, since a theoretical electromotive force of the fuel cell is about 1 V, power generation efficiency is reduced by about 5% if a power collection loss is assumed to be 0.05 V. Accordingly, a permissible value of the power collection loss is conceivably about 0.05 V, about 0.01 V if much higher power generation efficiency is required. Thus, a relation among conductivity, a length and an average current density of the cylindrical porous metal substrate is obtained by setting conditions to two stages of 0.05 and 0.01 V.

[Condition 1: power collection loss 0.05 V]

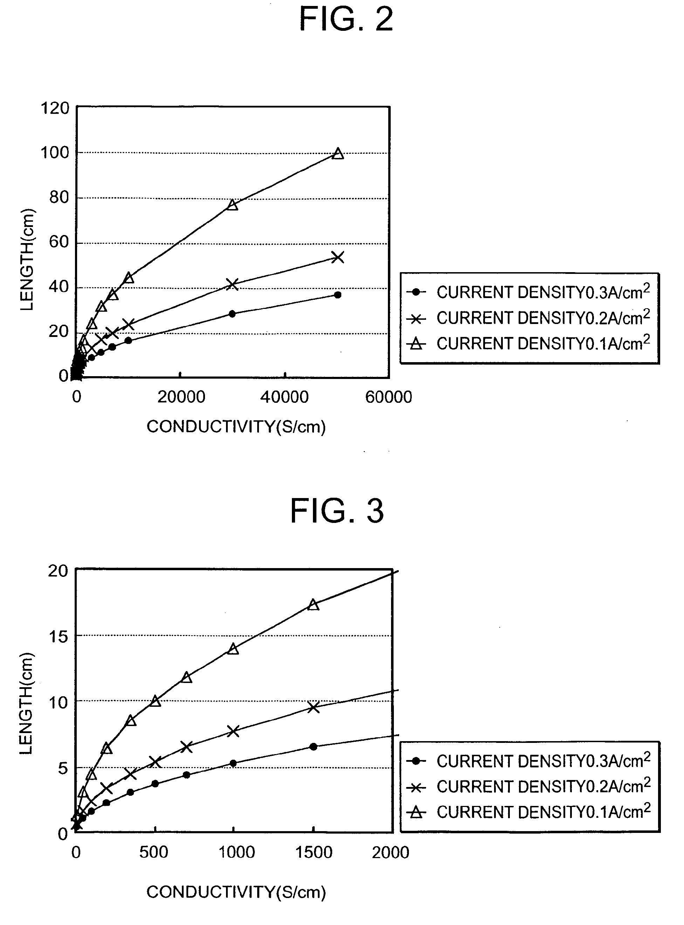

On the assumption of t=0.2 cm and $R_e$=0.7 $\Omega cm^2$, a relation between conductivity σ and a length L of the cylindrical porous metal substrate is obtained so as to set a value of the equation (2) to 0.05 V. A result is shown in FIGS. 2 and 3. FIG. 3 is a graph of an expanded part up to 2000 S/cm in an x coordinate of FIG. 2.
Since a practical length and a practical current density of the cylindrical porous metal substrate are respectively about 5 cm or more and 0.1 A/cm$^2$ or more, it can be understood from FIG. 2 that required conductivity of the cylindrical porous metal substrate is 130 S/cm or more if a permissible power collection loss is 0.05 V. Here, it can be understood that a conductivity of 430 S/cm or more is necessary if a current density must be 0.2 A/cm$^2$ or more, and a conductivity of 900 S/cm or more is necessary if a current density must be 0.3 A/cm$^2$ or more.

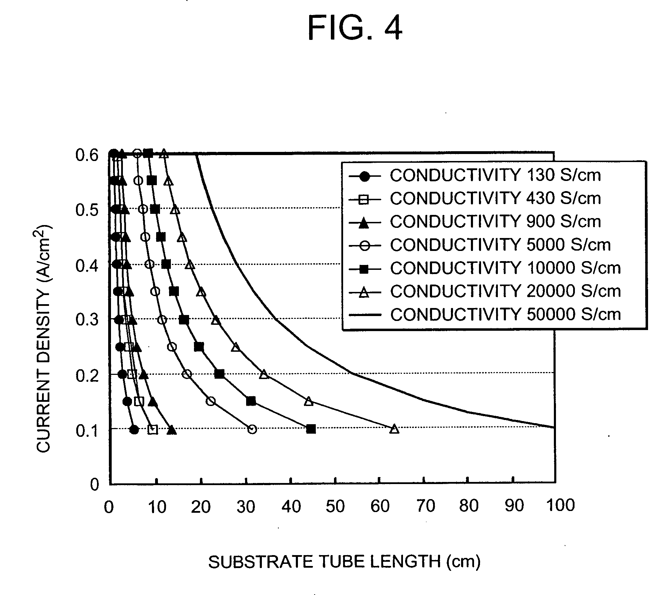

FIG. 4 shows a result of obtaining a relation between a length L of the cylindrical porous metal substrate and a current density I so as to set a value of the equation (2) to 0.05 V. A reason for setting a maximum conductivity of the cylindrical porous metal substrate to 50000 S/cm is that a conductivity of a metal bulk (dense body) is about 100000 S/cm, and becomes 1/2 or lower thereof in the case of a cylindrical porous metal substrate of porosity 40 to 50%.
As apparent from FIG. 4, if a permissible power collection loss is 0.05 V, a length of a cylindrical porous metal substrate must be 100 cm or lower even if the cylindrical porous metal substrate of highest conductivity (50000 S/cm) is used. Here, it can be understood that a length of the cylindrical porous metal substrate must be 54 cm or lower if a current density must be set to 0.2 A/cm$^2$ or more, and 37 cm or lower if a current density must be set to 0.3 A/cm$^2$ or more. Additionally, if a conductivity of the cylindrical porous metal substrate is low, a length must be reduced correspondingly. However, in the case of collecting power from both ends of the cylindrical porous metal substrate, a length thereof can be doubled.

[Condition 2: power collection loss 0.01 V]

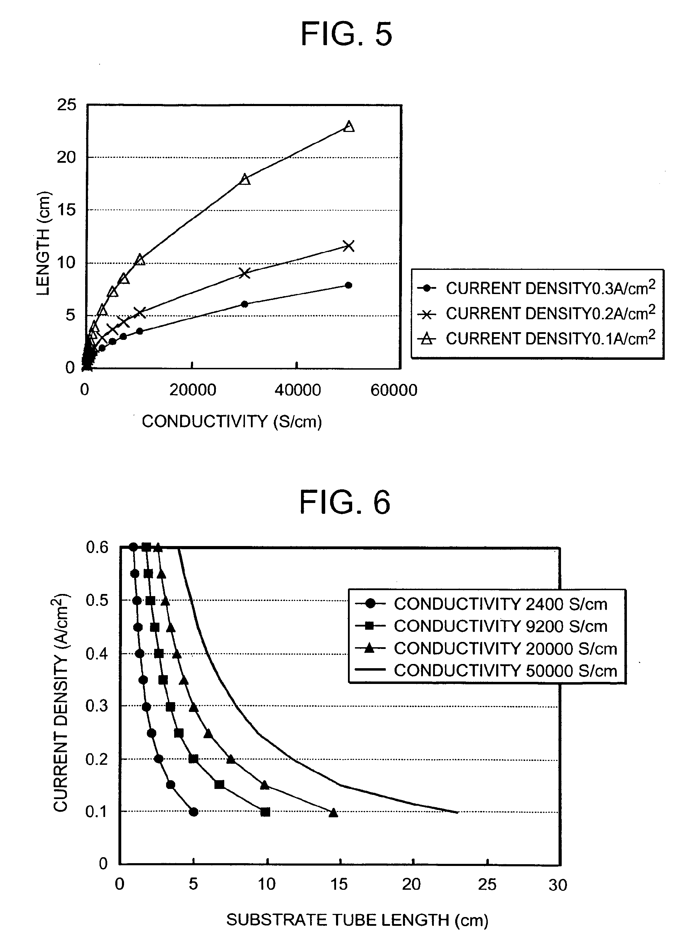

On the assumption of t=0.2 cm and R$_e$=0.7 $\Omega$cm$^2$, a relation between conductivity $\sigma$ and a length L of the cylindrical porous metal substrate is obtained so as to set a value of the equation (2) to 0.01 V. A result is shown in FIG. 5.

Since a practical length and a practical current density of the cylindrical porous metal substrate are respectively about 5 cm or more and 0.1A/ cm$^2$ or more, it can be understood from FIG. 4 that a required conductivity of the cylindrical porous metal substrate is 2400 S/cm or more if a permissible power collection loss is 0.01 V. Here, it can be understood that a conductivity of 9200 S/cm or more is necessary if a current density must be 0.2 A/cm$^2$ or more, and a conductivity of 20000 S/cm or more is necessary if a current density must be 0.3 A/cm$^2$ or more.

FIG. 6 shows a result of obtaining a relation between a length L of the cylindrical porous metal substrate and a current density so as to set a value of the equation (2) to 0.01 V. As apparent from FIG. 6, if a permissible power collection loss is 0.01 V, a length of a cylindrical porous metal substrate must be 23 cm or lower even if the cylindrical porous metal substrate of highest conductivity (50000 S/cm) is used.

Here, it can be understood that a length of the cylindrical porous metal substrate must be 12 cm or lower if a current density must be set to 0.2 A/cm$^2$ or more, and 8 cm or lower if a current density must be set to 0.3 A/cm$^2$ or more. Additionally, if a conductivity of the cylindrical porous metal substrate is low, a length must be reduced correspondingly. However, in the case of collecting power from both ends of the cylindrical porous metal substrate, a length thereof can be doubled as in the case of the condition 1.

On the basis of the results of the embodiment, the following embodiment presents a method for assembling a solid oxide fuel cell in which no interconnector layers are formed different from the conventional case.

Embodiment 2

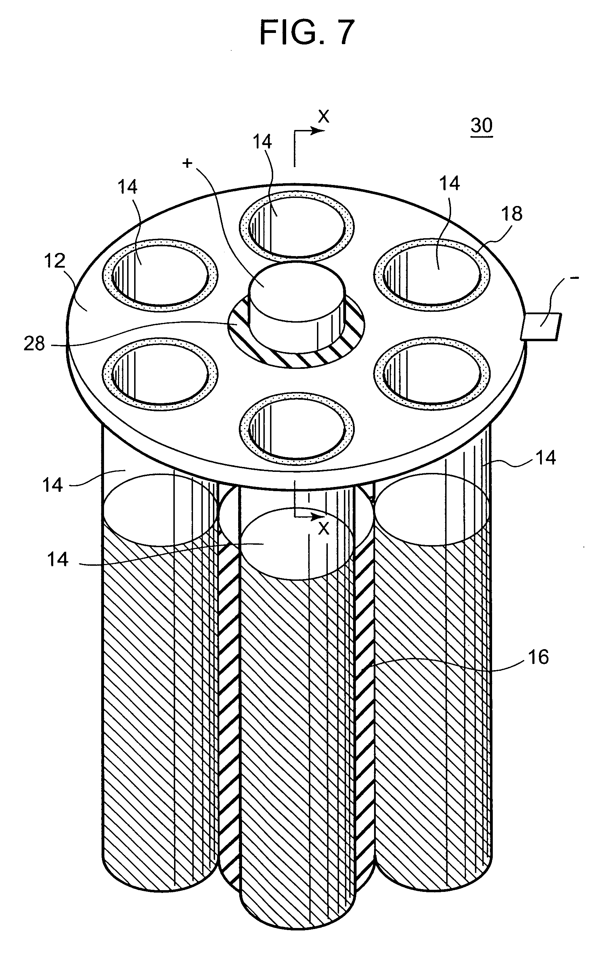

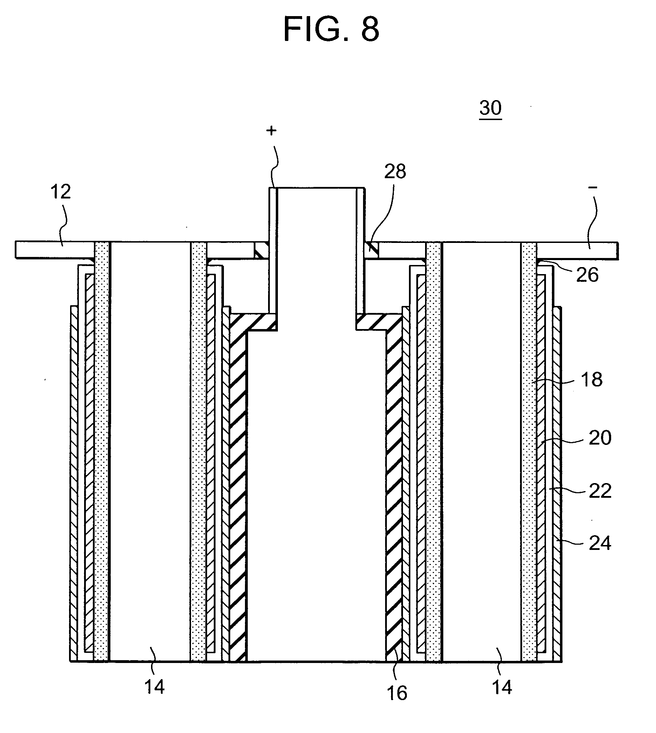

FIGS. 7 and 8 are perspective and sectional views showing a constitution of an embodiment of the present invention. A reference numeral 12 denotes a first power collection member (metal plate), 14 denotes a single solid oxide fuel cell, and 16 denotes a second power collection member (power collection tube). A cylindrical porous metal substrate 18 of the single cell 14 is manufactured so as to obtain porosity of 40% by a method for mixing→kneading→extrusion molding→drying→degreasing→in-vacuum sintering an alloy powder which contains HRE 5 by Hitachi Metals, Ltd. (registered trade mark, Fe-Cr-Al) and whose particle diameter is 10 to 100 $\mu$m with a binder, Since conductivity $\rho$ of the cylindrical porous metal substrate 18 is 10000 S/cm, an outer diameter, a tube thickness and a length thereof are respectively 20 mm, 1.5 mm and 30 cm. By using this cylindrical porous metal substrate 18, an oxidant electrode 20, an electrolytic layer 22, and a fuel electrode 24 are formed thereon by the following method.

[Method for manufacturing cell]

Preparation of slurry solvent

A slurry solvent is prepared by mixing ethanol, terpineol, ethyl cellulose, an antifoamer, and a dispersant at a weight ratio of 56:37:6.8:0.1:0.1.

Preparation of oxidant electrode slurry

Oxidant electrode slurry is prepared by mixing a powder which is a mixture of a powder La$_{0.85}$Sr$_{0.15}$MnO$_3$ of an average particle diameter 2 $\mu$m and YSZ (8mol%Y$_2$O$_3$-92mol%ZrO$_2$) of an average particle diameter 0.5 $\mu$m at a weight ratio of 8:2 with the aforementioned slurry solvent at a weight ratio of 3:7.

Preparation of electrolytic slurry

Electrolytic slurry is prepared by mixing a YSZ powder of an average particle diameter 0.5 $\mu$m, the slurry solvent and ethanol at a weight ratio of 20:50:30. Preparation of fuel electrode slurry

Fuel electrode slurry is prepared by mixing a powder which is a mixture of a nickel oxide power of an average particle diameter 3 $\mu$m and a YSZ power of an average particle diameter 0.5 $\mu$m at a weight ratio of 9:1 with the slurry solvent at a weight ratio of 1:1.

Formation of electrode, electrolytic layer

Oxidant electrode slurry is coated on a surface up to an end of a cylindrical porous metal substrate 18 by a method for dipping the cylindrical porous metal substrate in the oxidant electrode slurry (dipping method), dried at about 60°C, and then subjected to 2-hour heat treatment at 1000°C in air.

A permeation depth of the slurry in the cylindrical porous metal substrate can be adjusted based on viscosity thereof. According to the embodiment, a permeation depth is about 50 μm, and a thickness of an oxidant electrode 20 is about 50 μm.

Next, electrolytic slurry is coated on the oxidant electrode 20 except for a part of the end by a similar dipping method, dried at about 60°C, and then subjected to 2-hour heat treatment at 1000°C in air. A thickness of an electrolytic layer 22 is about 20 μm.

Further, fuel electrode slurry is coated on the electrolytic layer 22 up to a position in which an end of the electrolytic layer can be seen over the entire periphery by a similar dipping method, dried at about 60°C, and then subjected to 2-hour heat treatment at 1000°C in air. A thickness of a fuel electrode 24 is about 50 μm.

The end of the single cell 14 manufactured by the foregoing method is mechanically and electrically connected to a conductive metal plate 12, e.g., a metal plate 12 constituted of a dense body HRE 5 (registered trade mark), by a method such as TIG welding (welding section 26). Thus, power collection can be carried out on the oxidant electrode 20 side.

Power collection on the fuel electrode 24 side is enabled by contact with a heat resistant metal. In FIGS. 7 and 8, a plurality of cells 14 are circularly arranged, and a heat resistant insulation sealing material 28, e.g., mica or the like, is inserted so as to prevent electric connection of a heat resistant power collection tube 16 arranged to be brought into contact with the fuel electrode 24 of each cell 14 to the metal plate 12 for oxidant electrode power collection.

A group of cells prepared in the aforementioned manner constitutes one assembly 30. A module that has an optional voltage and an optional current density can be formed by connecting such assemblies 30 in series or in parallel.

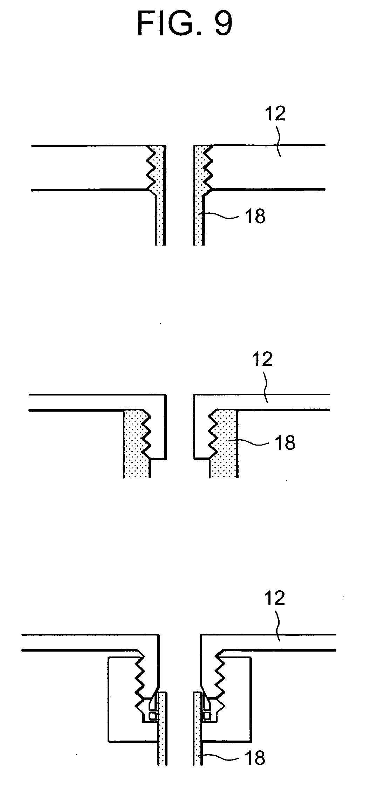

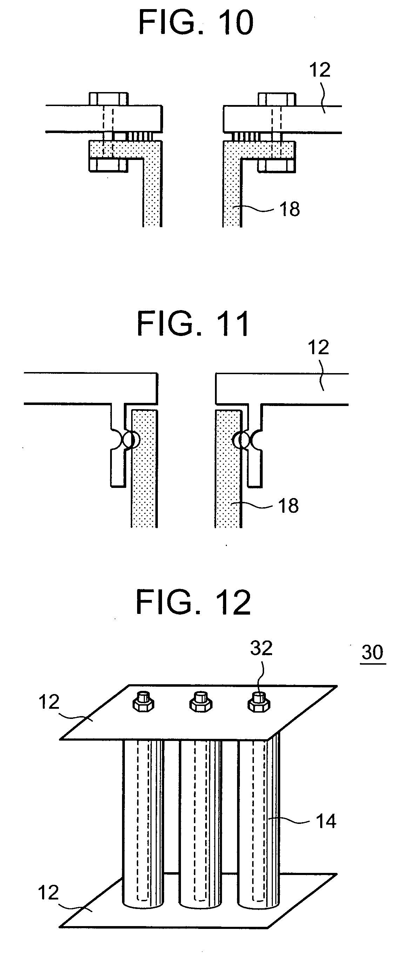

According to the embodiment, the TIG welding is employed as the connection method with the conductive metal plate 12. However, the connection method is not limited to the TIG welding. Other methods such as soldering can be used. Since the connected parts are exposed to a temperature equal to a power generation temperature, a solder material for a high temperature must be used. Soldering is enabled by using, e.g., a Ti-Cu-Ni solder material as the solder material for a high temperature. In addition to the connection methods such as welding and soldering, there are a screw fixing system shown in FIG. 9, a flange fixing system of FIG. 10, an engagement fixing system of FIG. 11 and the like. The methods are not limited to the above as long as durability at the temperature equal to the power generation temperature is obtained.

Embodiment 3

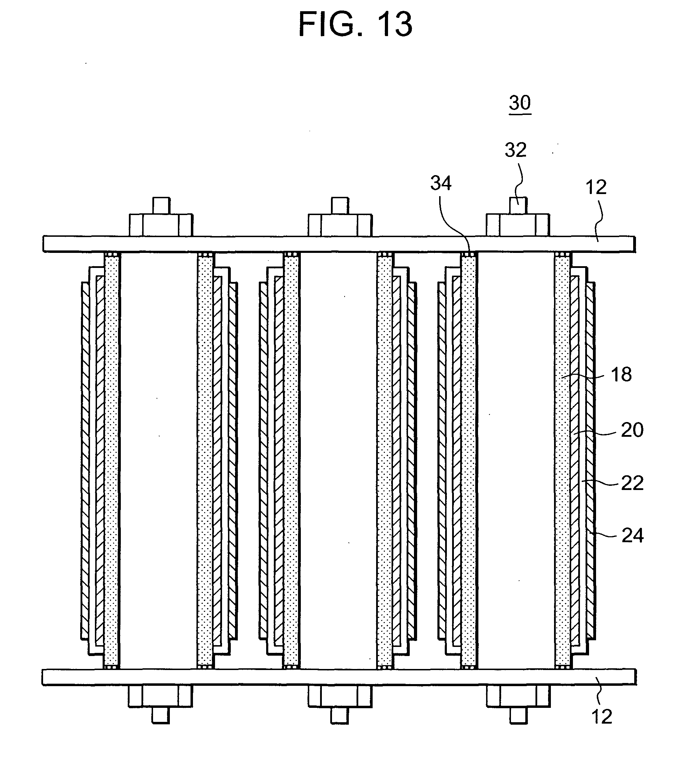

FIGS. 12 and 13 are perspective and sectional views showing a constitution of another embodiment of the present invention. A cell 14 and two conductive metal plates 12 similar to those of the Embodiment 2 are mechanically and electrically connected together by a rod 32 put through a cylindrical porous metal substrate 18, whereby power collection is carried out on an oxidant electrode 20 side thereon.

In this case, power collection resistance can be reduced by arranging a conductive sealing material, e.g., a metal ring 34, between the cylindrical porous metal substrate 18 and the two metal plates 12.

Embodiment 4

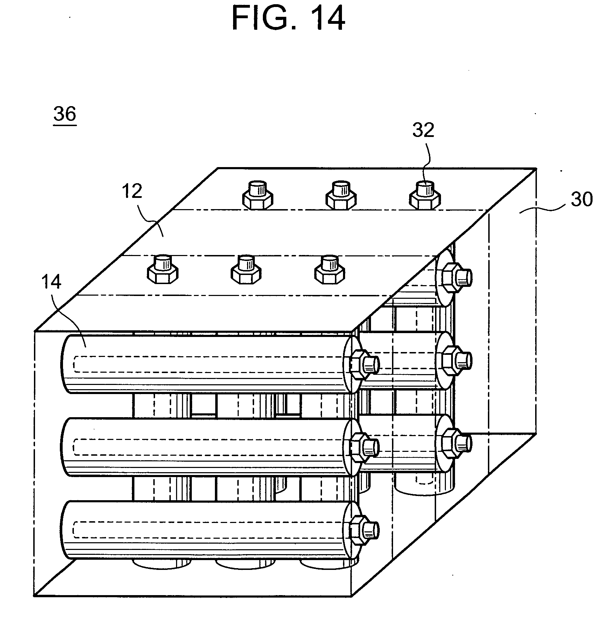

FIG. 14 is a constitutional view of another embodiment of the present invention. A cell 14 similar to that of the Embodiment 2 is used. A plurality of cells 14 are arranged in a row, and each cell 14 and a conductive metal plate 12 are mechanically and electrically connected together by using a rod 32 as in the case of the Embodiment 3. Assemblies 30 formed in such a manner are stacked to be orthogonal to each other, whereby a module 36 is formed.

By forming the module 36 in the above manner; power collection can be executed on an oxidant electrode 20 side of a cylindrical porous metal substrate 18 from the metal plate 12. On a fuel electrode 24 side, the adjacent assemblies 30 are stacked so that connection directions of the cells 14 can be orthogonal to, and brought into contact with each other. Thus, power collection can be executed from an end of the module 36, i.e., a front or a back of the module 36 in FIG. 14.

Before formation of an electrode for the oxidant electrode 20 or the fuel electrode 24, i.e., at a stage in which the cylindrical porous metal substrate 18 is formed, or the oxidant electrode 20 and an electrolytic layer 22 are formed thereon, a module is constituted, and then the electrode is formed, thereby maintaining longer electric contact. Thus, a reduction in contact which accompanies thermal expansion or oxidation-reduction at the time of starting/stopping can be suppressed to facilitate module formation.

By the aforementioned constitution, the power collection tube 16 necessary on the fuel electrode 24 side according to the Embodiment 2 becomes unnecessary. According to the embodiment, power collection can be carried out while uniform potentials are maintained at the oxidant electrode 20 and the fuel electrode 24. Thus, an assembly volume density can be improved to form a compact module.

Embodiment 5

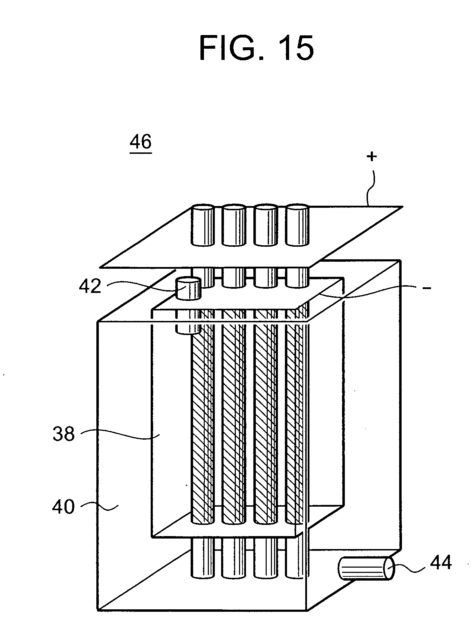

FIG. 15 is a constitutional view of another embodiment of the present invention. A cell 14 similar to that of the Embodiment 2 is used. A plurality of cells 14 are arranged in a row, and each cell 14 and a conductive metal plate 12 are mechanically and electrically connected together by a rod 32 similar to that of the Embodiment 3.

In an assembly 30 formed in the above manner, a casing 38 made of a porous metal similar to a cylindrical porous metal substrate 18 is installed to be brought into contact with a fuel electrode 24 side of each cell 14. A combustion chamber 40 is formed in a space between the porous metal casing 38 and the assembly 30, and a solid oxide fuel cell power generator 46 is manufactured in which a fuel gas supply tube 42 is connected to the porous metal casing 38 and an oxygen supply tube 44 is connected to the combustion chamber 40.

When a fuel gas is supplied through the fuel gas supply tube 42 into the porous metal casing 38, a fuel gas that has not contributed to power generation flows out to the combustion chamber 40 outside the porous metal casing 38. Oxygen is supplied through the oxygen supply tube 44 into the combustion chamber 40. The fuel gas is combusted in the combustion chamber 40 to heat the porous metal casing 38.

By the aforementioned constitution, thermal conduction is improved between the combustion chamber 40 and the cell 14 to enable starting of the solid oxide fuel cell within a short time. Moreover, since the porous metal casing 38 is brought into contact with the fuel electrode 24 side of each cell 14, the casing 38 can be used as an earth.

Each of the Embodiments 2 to 5 uses the cell 14 in which the oxidant electrode 20, the electrolytic layer 22, and the fuel electrode 24 are formed in this order on the cylindrical porous metal substrate 18. However, a stacking order of the electrodes, the electrolytic layer may be the fuel electrode, the electrolytic layer, and the oxidant electrode.

The solid oxide fuel cell according to claim 1 of the present invention comprises: the solid oxide fuel cell portions each of which includes the cylindrical porous metal substrate, the first electrode formed on the full periphery of the porous metal substrate, the solid electrolytic layer formed on the full periphery of the first electrode, and the second electrode formed on the full periphery of the solid electrolytic layer; and the first power collecting section connected to at least a part of the porous metal substrate to collect power from the first electrode. Thus, since the solid electrolytic layer and the second electrode are formed on the full periphery without disposing any interconnector layers different from the conventional case, cell formation becomes easy, and it is possible to prevent a problem of occurrence of cracking or peeling-off in the solid electrolytic layer or the second electrode near the interconnector layer.

Additionally, in the solid oxide fuel cell configured to collect power from the interconnector layer, the structure is complex when the plurality of cells are formed into a module. However, it is possible to facilitate module formation by disposing the collector connected to at least a part of the cylindrical porous metal substrate.

According to the solid oxide fuel cell of claim 2 of the invention, in the solid oxide fuel cell described in claim 1, since the cylindrical porous metal substrate has a conductivity of 130 S/cm or more, sufficient power can be collected from the collector connected to a part of the same.

According to the solid oxide fuel cell of claim 3 of the invention, in the solid oxide fuel cell described in claim 2, since the first power collecting section is connected to the position which does not exceed a distance of 100 cm from any place of the porous metal substrate, more practical power collection can be executed.

The solid oxide fuel cell assembly according to claim 4 of the present invention comprises: the plurality of porous metal substrates of the solid oxide fuel cell portions described in one of claims 1 to 3 which are connected to a first power collecting section that is connected to the first electrode. Thus, the plurality of solid oxide fuel cells can be easily assembled, and the solid oxide fuel cell assembly having an optional output can be formed.

According to the solid oxide fuel cell assembly of claim 5 of the invention, the plurality of solid oxide fuel cell portions are arranged on the same circumference, the porous metal substrate of each solid oxide fuel cell portion is connected to the first power collecting section, and the second power collecting section is arranged in a center of the circumference to be brought into contact with the second electrode of each solid oxide fuel cell portion. Thus, power collection can be efficiently executed from the second electrode.

The solid oxide fuel cell module according to claim 6 of the present invention comprises: the plurality of stacked solid oxide fuel cell assemblies described in claim 4 in which the plurality of solid oxide fuel cell portions are arranged in a row, and the porous metal substrate of each solid oxide fuel cell portion is connected to the first power collecting section. The directions of the solid oxide fuel cell portions of the adjacent solid oxide fuel cell assemblies are orthogonal to each other. Thus, since the solid oxide fuel cell assembly can be formed into a compact module, and the electrode of the solid oxide fuel cell is brought into contact with that of the other solid oxide fuel cell, a uniform electrode potential can be maintained between the solid oxide fuel cells. Therefore, it is possible to obtain an efficient solid oxide fuel cell module.

The solid oxide fuel cell power generator according to claim 7 of the present invention comprises: the porous metal casing made of the porous metal; the fuel gas supplying means connected to the porous metal casing to supply the fuel gas to the same; the combustion chamber disposed outside the porous metal casing; and the oxygen supplying means connected to the combustion chamber to supply oxygen to the same. The solid oxide fuel cell assembly or the solid oxide fuel cell module described in one of claims 4 to 6 is housed in the porous metal casing, the second electrode of each solid oxide fuel cell portion is disposed to be brought into contact with the porous metal casing, and the solid oxide fuel cell assembly or the solid oxide fuel cell module is heated by combusting the fuel gas which has flowed out from the porous metal casing into the combustion chamber. Thus, since the fuel gas that has not contributed to power generation at the fuel electrode flows out from the porous metal casing into the combustion chamber to be combusted, heat is supplied through the porous metal casing to the solid oxide fuel cell to enable an increase of a temperature to a running temperature zone of the solid oxide fuel cell within a short time. Therefore, it is possible to obtain a solid oxide fuel cell power generator of high start-up performance.

**Claims**

1. A solid oxide fuel cell comprising:

   solid oxide fuel cell portions each of which includes a cylindrical porous metal substrate, a first electrode formed on a full periphery of the porous metal' substrate, a solid electrolytic layer formed on a full periphery of the first electrode, and a second electrode formed on a full periphery of the solid electrolytic layer; and
   a first power collecting section connected to at least a part of the porous metal substrate to collect power from the first electrode.

2. The solid oxide fuel cell according to claim 1, wherein the porous metal substrate has a conductivity of 130 S/cm or more.

3. The solid oxide fuel cell according to claim 2, wherein the first power collecting section is connected to a position which does not exceed a distance of 100 cm from any place of the porous metal substrate.

4. A solid oxide fuel cell assembly comprising:

   a plurality of porous metal substrates of the solid oxide fuel cell portions described in one of claims 1 to 3 which are connected to the first power collecting section that is connected to the first electrode.

5. The solid oxide fuel cell assembly according to claim 4, wherein:

   the plurality of solid oxide fuel cell portions are arranged on the same circumference, the porous metal substrate of each solid oxide fuel cell portion is connected to the first power collecting section, and
   a second power collecting section is arranged in a center of the circumference to be brought into contact with the second electrode of each solid oxide fuel cell portion.

6. A solid oxide fuel cell module comprising:

   a plurality of stacked solid oxide fuel cell assemblies described in claim 4 in which the plurality of solid oxide fuel cell portions are arranged in a row and the porous metal substrate of each solid oxide fuel cell portion is connected to the first power collecting section,

   wherein directions of the solid oxide fuel cell portions of the adjacent solid oxide fuel cell assemblies are orthogonal to each other.

7. A solid oxide fuel cell power generator comprising:

   a porous metal casing made of a porous metal;
   fuel gas supplying means connected to the porous metal casing to supply a fuel gas to the porous metal casing;
   a combustion chamber disposed outside the porous metal casing; and
   oxygen supplying means connected to the combustion chamber to supply oxygen to the combustion chamber, wherein:

the solid oxide fuel cell assembly or the solid oxide fuel cell module described in one of claims 4 to 6 is housed in the porous metal casing, the second electrode of each solid oxide fuel cell portion is disposed to be brought into contact with the porous metal casing, and
the solid oxide fuel cell assembly or the solid oxide fuel cell module is heated by combusting the fuel gas which has flowed out from the porous metal casing into the combustion chamber.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

FIG. 16

50

58

52

54

AIR

56

FUEL

**European Patent Office**

## EUROPEAN SEARCH REPORT

Application Number

EP 04 01 2598

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | PATENT ABSTRACTS OF JAPAN vol. 1998, no. 10, 31 August 1998 (1998-08-31) & JP 10 125346 A (FUJI ELECTRIC CO LTD), 15 May 1998 (1998-05-15) * abstract * ----- | 1-7 | H01M8/24 H01M8/02 H01M8/12 |
| X | PATENT ABSTRACTS OF JAPAN vol. 2002, no. 10, 10 October 2002 (2002-10-10) & JP 2002 164073 A (SANYO ELECTRIC CO LTD), 7 June 2002 (2002-06-07) * abstract * ----- | 2-7 | |
| X | PATENT ABSTRACTS OF JAPAN vol. 0144, no. 71 (E-0990), 15 October 1990 (1990-10-15) & JP 2 192665 A (FUJIKURA LTD), 30 July 1990 (1990-07-30) * abstract * ----- | 1-7 | |
| Y | PATENT ABSTRACTS OF JAPAN vol. 0175, no. 78 (E-1450), 20 October 1993 (1993-10-20) & JP 5 174861 A (FUJIKURA LTD), 13 July 1993 (1993-07-13) * abstract * ----- | 1-7 | TECHNICAL FIELDS SEARCHED (Int.Cl.7) H01M |
| Y | PATENT ABSTRACTS OF JAPAN vol. 0151, no. 06 (E-1044), 13 March 1991 (1991-03-13) & JP 2 312165 A (FUJIKURA LTD), 27 December 1990 (1990-12-27) * abstract * ----- -/-- | 1-7 | |

The present search report has been drawn up for all claims

| Place of search | Date of completion of the search | Examiner |
|---|---|---|
| Munich | 22 September 2004 | Stellmach, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 04 01 2598

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | PATENT ABSTRACTS OF JAPAN vol. 2003, no. 12, 5 December 2003 (2003-12-05) & JP 2003 346843 A (SANYO ELECTRIC CO LTD), 5 December 2003 (2003-12-05) * abstract * ----- | 1-7 | |
| | | | TECHNICAL FIELDS SEARCHED (Int.Cl.7) |

The present search report has been drawn up for all claims

| Place of search | Date of completion of the search | Examiner |
|---|---|---|
| Munich | 22 September 2004 | Stellmach, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 482 590 A1**

**ANNEX TO THE EUROPEAN SEARCH REPORT
ON EUROPEAN PATENT APPLICATION NO.** EP 04 01 2598

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2004

| Patent document cited in search report | | Publication date | Patent family member(s) | | Publication date |
|---|---|---|---|---|---|
| JP 10125346 | A | 15-05-1998 | NONE | | |
| JP 2002164073 | A | 07-06-2002 | NONE | | |
| JP 2192665 | A | 30-07-1990 | JP | 2818944 B2 | 30-10-1998 |
| JP 5174861 | A | 13-07-1993 | NONE | | |
| JP 2312165 | A | 27-12-1990 | JP | 2799877 B2 | 21-09-1998 |
| JP 2003346843 | A | 05-12-2003 | CA | 2429899 A1 | 29-11-2003 |
| | | | EP | 1376727 A2 | 02-01-2004 |
| | | | US | 2004043269 A1 | 04-03-2004 |

EPO FORM P0459